# EUROPEAN PATENT SPECIFICATION

(11) **EP 2 589 195 B1**
(45) Date of publication and mention of the grant of the patent: **05.08.2020**
(21) Application number: 11727574.3
(22) Date of filing: 01.06.2011
(51) Int. Cl.: H04L 29/06

(54) **METHOD AND APPARATUS FOR TRANSMITTING AN APPLICATION IDENTIFIER ACROSS APPLICATION ELEMENTS**
VERFAHREN UND VORRICHTUNG ZUR ÜBERMITTLUNG VON ANWENDUNGSIDENTIFIKATOREN ÜBER APPLIKATIONSELEMENTE
PROCÉDÉ ET DISPOSITIF POUR LE TRANSFERT D'IDENTIFICATEURS D'APPLICATIONS À TRAVERS DES ÉLÉMENTS D'APPLICATIONS

(30) Priority: 02.07.2010 US 829484
(43) Date of publication of application: 08.05.2013
(73) Proprietor: Cisco Technology, Inc., San Jose, CA 95134-1706 (US)
(72) Inventor: DHESIKAN, Subhasri, San Jose California 95129 (US); POLK, James, M., Colleyville Texas 76034 (US)
(74) Representative: Kazi, Ilya
(86) International application number: PCT/US2011/038740
(87) International publication number: WO 2012/003063

(56) References cited:
- Scott Ludwig, Peter Saint-Andre, Sean Egan, Robert McQueen, Diana Cionoiu: "XEP-0167: Jingle RTP Sessions", XMPP Standards Foundation (XSF) , vol. Version 1.1 23 December 2009 (2009-12-23), pages 1-43, XP002653968, XMPP Standards Foundation, Denver, CO 80202, USA Retrieved from the Internet: URL:http://xmpp.org/extensions/xep-0167.pd f [retrieved on 2011-07-28]

## Description

### TECHNICAL FIELD

The disclosure relates generally to communications networks and, more specifically, to transmitting information relating to traffic flows between different domains in an overall network.

### BACKGROUND

When a network supports only one voice application and one video application, it is relatively easy for a recipient of a call offer to identify the appropriate application for handling the call and, thus, the appropriate quality of service to request. As a result, the call may be handled efficiently and, typically, to the satisfaction of the initiator of the call and the recipient of the call. When a network supports multiple types of similar applications, it becomes difficult to identify an application type associated with a traffic flow and, therefore, to identify an appropriate quality of service to request for handling the traffic flow. In addition, when the network supports multiple administrative domains and traffic flows across the boundaries of the administrative domains, it often becomes even more difficult to identify an application type and a quality of service associated with a traffic flow.

A document entitled "XEP-0167: Jingle RTP Sessions" by Scott Ludwig, et al, pages 1-43, Version 1.1, 23rd December 2009, published by XMPP Standards Foundation, Denver, CO, USA, discloses a Jingle application type for negotiating one or more sessions that use the Real-time Transport Protocol (RTP) to exchange media such as voice or video. The application type includes a straightforward mapping to Session Description Protocol (SDP) for interworking with SIP media endpoints.

### BRIEF DESCRIPTION OF THE DRAWINGS

The disclosure will be readily understood by the following detailed description in conjunction with the accompanying drawings in which:
FIG. 1 is a diagrammatic representation of a network that includes a plurality of domains within which systems, e.g., application elements, are arranged to send and/or receive packets that specify the type of traffic associated with a real-time transport protocol (RTP) flow in accordance with an embodiment.
FIG. 2A is a diagrammatic representation of a Session Description Protocol (SDP) payload, e.g., a payload within a Session Initiation Protocol (SIP) or RTSP message that is an offer or an answer, that includes an attribute line that specifies a class of service in accordance with an embodiment.
FIG. 2B is a diagrammatic representation of an SDP payload, e.g., a payload within a SIP or RTSP message that is an offer or an answer, that includes an attribute line that specifies a class of service and includes tags in accordance with an embodiment.
FIG. 3 is a diagrammatic representation of an SDP payload that identifies a particular traffic class associated therewith in accordance with an embodiment.
FIG. 4 is a block diagram representation of a device or an application element which is suitable for generating and/or processing an SDP payload, that identifies an application class, or class of service, in accordance with an embodiment.
FIG. 5 is a process flow diagram which illustrates a method of generating an SDP payload that specifies a class of service in accordance with an embodiment.
FIG. 6 is a process flow diagram which illustrates a method of processing an SDP payload that specifies a class of service in accordance with an embodiment.

### DESCRIPTION OF EXAMPLE EMBODIMENTS

### GENERAL OVERVIEW

The invention is defined by the subject matter of the independent claims. Advantageous enhancements are subject to the dependent claims.

According to one aspect, a method includes generating a Session Description Protocol (SDP) construct, the SDP construct being arranged to be included in a first signaling flow. The method also includes providing an attribute in the SDP construct. The attribute identifies an application type associated with a first media flow. Finally, the SDP construct is forwarded on the first signaling traffic flow.

### DESCRIPTION

As different traffic flows, *e.g*., different traffic flows associated with a real-time transport protocol (RTP), are often associated with different qualities of service, the ability to process the traffic flows in accordance with their qualities of service may be compromised unless the qualities of service requirements may be readily identified. For example, if a correct quality of service is not requested when admission control is performed, or if the correct quality of service is not identified when a Diffserv Codepoint (DSCP) is assigned to a received flow, the overall quality of service associated with the flow may be compromised. Further, as will be appreciated by those skilled in the art, the ability to provide a correct quality of service may further be compromised unless standard definitions of qualities of service are used in different administrative domains.

In one embodiment, when a signaling flow, *e.g.,* a call, crosses administrative domains, if the signaling flow includes an indicator, e.g., an indicator that is understood by the different administrative domains, of an application class or a class of service that is associated with a traffic flow, the recipient of the traffic flow may determine the application class. Once the application class or type is determined by the recipient, the recipient may ensure that the traffic flow is essentially processed consistently with the application class by, for example, negotiating with an overall network. For example, upon receiving a signaling flow associated with a call offer, a recipient may place an associated traffic flow into an appropriate queue for processing.

An application or a class of service may be identified, in the context of a Session Description Protocol (SDP) payload or, more generally, an SDP construct, associated with a Session Initiation Protocol (SIP), by the inclusion of an attribute line in the SDP payload. The attribute line may be added to an SDP payload, and used to identify an application or class of service in a manner that is substantially understood at least within a network that includes different administrative domains, e.g., administrative domains supported by different service providers. An application or class of service may be identified in the attribute line, as for example as a service class or "servclass." In one embodiment, there may be approximately twelve types of applications or classes of service as specified in RFC 4594, entitled "Configuration Guidelines for Diffserv Service Classes," published by the Internet Engineering Task Force (IETF). It should be appreciated that any number of types of applications or classes of service may be used, and such types of applications or classes of service are not limited to being specified in RFC 4594. For example, additional types of applications or classes of service may be defined in other RFCs. One example of another RFC that defines a class of service, *i.e.,* a "voice-admit" class of service, is RFC 5865, entitled "A Differentiated Services Code Point (DSCP) for Capacity-Admitted Traffic."

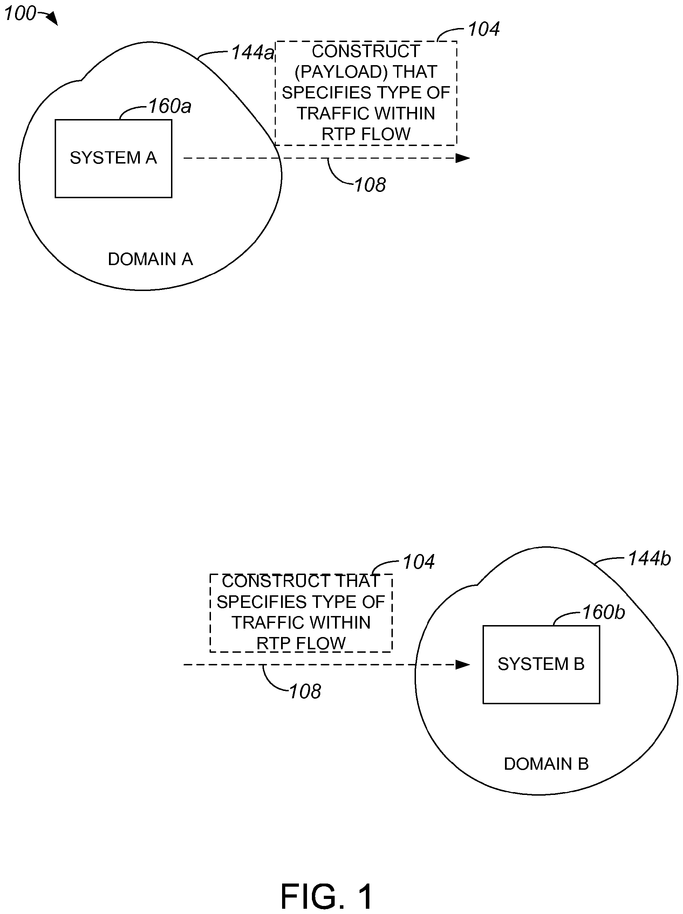

Referring initially to FIG. 1, a network that includes a plurality of domains within which systems are arranged to send and/or receive packets that specify the type of traffic associated with an RTP flow will be described in accordance with an embodiment. A network 100, which may generally be any suitable communications network such as one which supports telephony and unified communications, includes domains 144a, 144b. Domains 144a, 144b may be administrative domains, and may each include any number of systems 160a, 160b. Systems 160a. 160b may include, but are not limited to including, routers, computing systems, and/or application elements.

System 'A' 160a is arranged to forward, send, or otherwise provide a message 104 to domain 'B' 144b. System 'B' 160b is arranged to receive or otherwise obtain message 104 from system 'A' 160a or, more generally, domain 'A' 144a. Message 104 is effectively included in a flow 108, *e.g.,* in an SIP signaling flow included in flow 108,, that is to be sent from domain 'A' 144a to domain 'B' 144b. Domain 'A' 144a and domain 'B' 144b may include end devices, servers, and/or intermediary devices which are configured to send and to receive SIP signaling flows. Message 104 is configured to specify or otherwise identify the type of traffic contained within an RTP traffic flow included within flow 108. For example, message 104 is arranged to identify an application type and/or a class of service associated with an RTP traffic flow. It should be appreciated that in order for domain 'B' 144b to understand the specification of the type of traffic in message 104, an indicator that identifies the type of traffic is typically globally understood within network 100, or at least between domain 'A' 144a and domain 'B' 144b. As previously mentioned, in one embodiment, the type of traffic may be identified using definitions specified in RFC 4594.

An application type and/or a class of service that is specified in a message passed from one domain to another may, in general, represent the per hop behavior that is substantially required from network elements. While the described embodiments generally recommend the use of RFC 4594 to enable globally unique application types to be used, it should be appreciated that in other embodiments, unique application types may be locally defined within an administrative domain for substantially local use. As previously mentioned, a traffic flow generally has an associated application or class of service. In general, the application or class of service associated with a traffic flow may be selected from any number of applications or classes of service. For example, in one embodiment, approximately twelve or more applications or classes of service may be associated with a traffic flow. For an embodiment in which there are approximately twelve applications or classes of service, the twelve applications or classes of service may be a network control service class, a telephony service class, a signaling service class, a multimedia conferencing service class, a real-time interactive service class, a multimedia streaming service class, a broadcast video service class, a low-latency data service class, an operations administration and management (OAM) service class, a high-throughput data service class, a standard service class, and a low-priority data service class. Each of these applications or classes of service may be characterized by, but is not limited to being characterized by, traffic characteristics such as packet sizes and transmission rates, tolerances to loss, tolerances to delay, and tolerances to jitter.

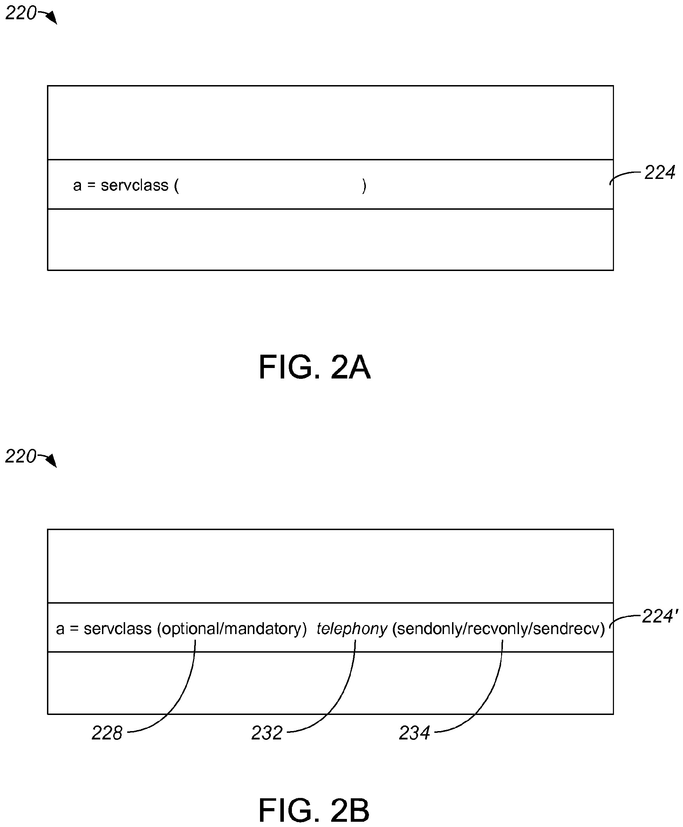

In one embodiment, an application type or class of service may be specified in an SDP payload. The SDP payload may be included as part of a signaling flow, e.g., an SIP or a Real-Time Streaming Protocol (RTSP) signaling flow. FIG. 2A is a diagrammatic representation of an SDP payload that includes an attribute line that specifies a class of service in accordance with an embodiment. An SDP payload 220 may generally includes information such as a session description, a time description, and a media description may be stored. The information may be stored substantially anywhere within SDP payload 220, *e.g*., in a body of SDP payload 220.

An attribute line 224 may be specified within SDP payload 220, *e.g*., within a body of SDP message 220. Attribute line 224 may be specified as an application type or a class of service. As shown, the specification of an application type or a class of service is effectively denoted by a "servclass" designation or label. The servclass label indicates that attribute line 224 is an application type or class of service for a traffic flow or stream.

Additional information such as parameters may be specified along with the servclass label. That is, tags may be specified in addition to an application type or class of service. FIG. 2B shows an example of SDP payload 220 with additional information specified along with the servclass label. Attribute line 224' may include a servclass that identifies an application type or class of service 232. As shown, application type 232 is a telephony service class, although it should be appreciated that application type 232 is not limited to being a telephony service class. Attribute line 224' may also include a tag 228 that identifies an optional or mandatory component pseudo-negotiation, and a directional tag 234 that identifies an expectation of how an element that generated SDP payload 220 intends for a corresponding traffic flow to be processed. For example, directional tag 234 may indicate whether traffic is to be sent only, received only, or both sent and received.

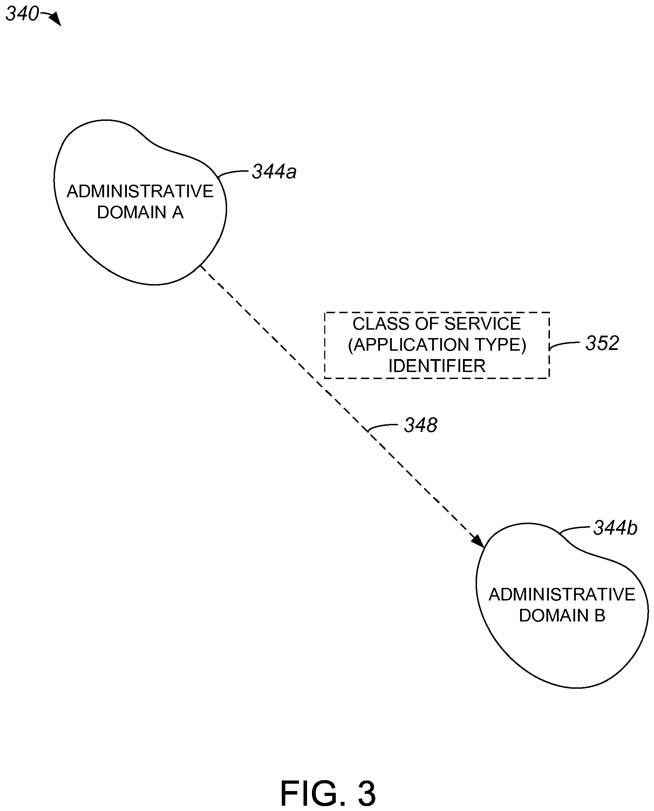

FIG. 3 is a diagrammatic representation of a signaling flow that identifies a particular traffic class associated with a traffic flow in accordance with an embodiment. A network 344a includes a plurality of administrative domains 344a, 344b. Generally, administrative domains 344a, 344b may be associated with different service providers. In the described embodiment, administrative domains 344a, 344b each include elements (not shown), e.g., devices, that are arranged to support the use of a service class attribute with respect to SDP payloads or, more generally, to SIP or RTSP signaling.

An element (not shown) in administrative domain 'A' 344a sends a flow 348, *e.g.,* a signaling flow, across the boundary of administrative domain 'A' 344a to administrative domain 'B' 344b. As a part of flow 348, information 352 which identifies a class of service or an application type is included. In one embodiment, information 352 may be a class of service identifier provided as a servclass attribute in an SDP payload, e.g., SDP payload 220 of FIG. 2A or FIG. 2B. Upon receiving information 352, administrative domain 'B' 344b or, more specifically, an element (not shown) within administrative domain 'B' 344b may identify the application type or class of service associated a corresponding traffic flow and, thus, process the traffic flow in accordance with the identified application type or class of service.

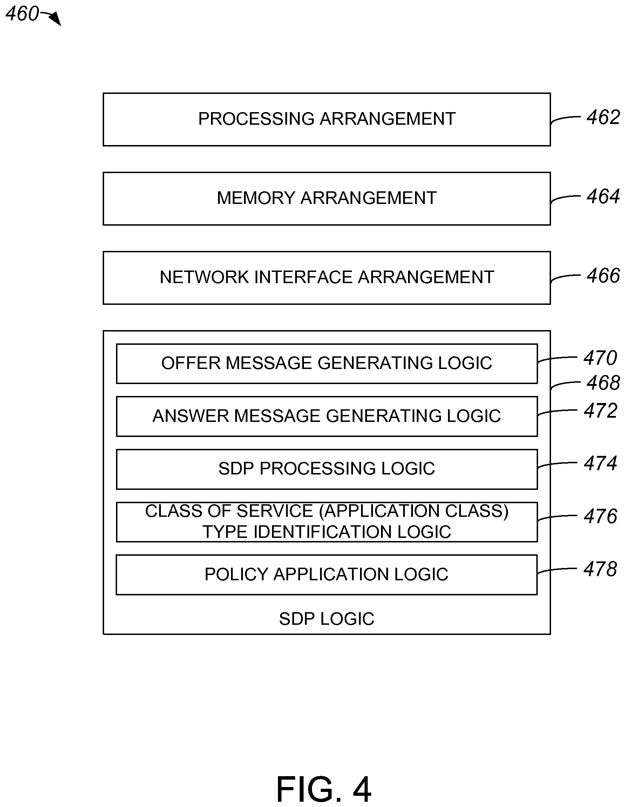

Administrative domains 344a, 344b includes elements which are capable of generating SDP payloads such as those described above with respect to FIGS. 2A and 2B. Referring next to FIG. 4, an element which is suitable for generating and/or processing an SDP payload, e.g., an offer or answer which includes an SDP payload, that identifies an application class, or class of service, will be described in accordance with an embodiment. An element or system 460 may generally be a computing system, and includes a processing arrangement 462, a memory arrangement 464, a network interface arrangement 466, and SDP logic 468. Processing arrangement 462 may include any number of processors, and may be configured to execute logic, e.g., SDP logic 468, associated with system 460. In one embodiment, processing arrangement 462 may be a central processing unit (CPU). Memory arrangement 464 may include a static memory, a dynamic memory, and/or a memory that is embodied as a computer-readable medium. Network interface arrangement 466 is arranged to enable system 460 to communicate with other systems within a network. Traffic flows may be received and transmitted on network interface arrangement 466. In general, network interface arrangement 466 may includes at least one input/output port, and may be configured to communicate using wireless and/or wired communications.

SDP logic 468, which may generally be associated with SIP logic (not shown), includes offer message generating logic 470 that allows an offer message with an SDP payload message to be created and answer message generating logic 472 that enables an answer message with an SDP payload to be created. Offer message generating logic 470 and answer message generating logic 472 are generally arranged to create messages that includes a servclass attribute or, more generally, messages that include an indication of an application class or class of service. SDP logic 468 also includes SDP processing logic 474 which is includes, but is not limited to including, logic associated with processing SDP payloads, establishing appropriate classes of service during admission control, and assigning appropriate DSCPs for a received flow. Class of service type identification logic 476 is arranged to identify an application type or class of service to associate with an SDP payload, e.g., with an SDP payload to be sent or with an SDP payload that has been obtained. Policy application logic 478 is arranged to apply policies, *e.g*., local policies, that are associated with particular application types or classes of service such that traffic flows, *e.g*., RTP traffic flows, may be processed as appropriate. The policies applied by policy application logic 478 may specify how system 460 effectively handles traffic flows of different application types or classes of service.

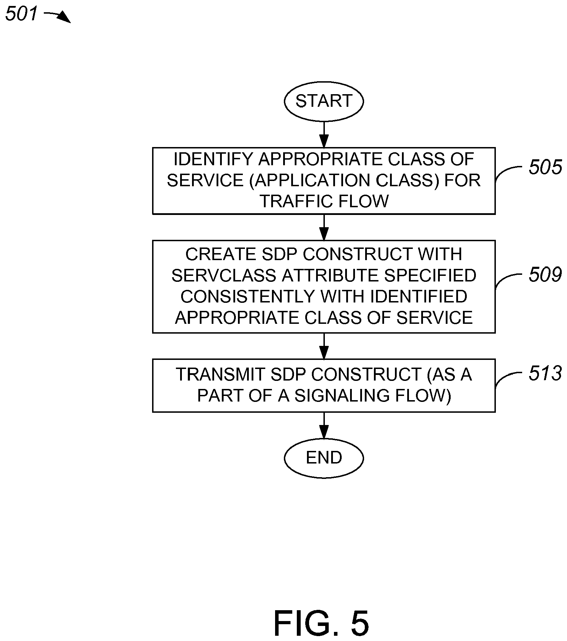

With reference to FIG. 5, a process flow diagram which illustrates a method of generating an SDP payload that specifies a class of service will be described in accordance with an embodiment. Typically, a system, a device, or an application element associated with a domain may generate the SDP payload. A process 501 of generating an SDP payload begins at step 505 in which an appropriate class of service, or application class, is identified. Such an identification may include determining an application type associated with an RTP traffic flow, and identifying a tag that is arranged to identify the application type.

After the appropriate class of service is identified, an SDP payload is created in step 509. The SDP payload is created with a servclass attribute that identifies the appropriate class of service, *e.g*., the class of service associated with an RTP traffic flow. Once the SDP payload is created with a servclass attribute specified consistently with the appropriate class of service, the SDP payload is transmitted in step 513. The SDP payload may generally be transmitted as a part of a message, such as a SIP message or RTSP message, to substantially any system, device, or application element within a network. Such a system, device, or application element may be in the same domain as the application element transmitting the message which includes the SDP payload, or in a different domain than the application element transmitting the message which includes the SDP payload. Upon transmitting the SDP payload, the process of generating an SDP payload is completed.

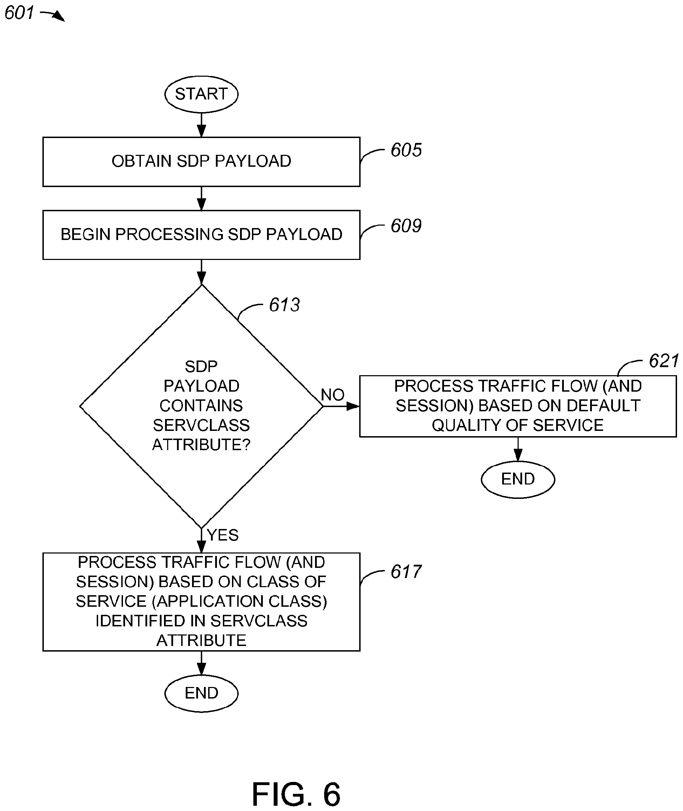

FIG. 6 is a process flow diagram which illustrates a method of processing an SDP payload, *e.g*., an SDP payload received as part of a message by a system or an application element, that specifies a class of service associated with a traffic flow in accordance with an embodiment. A method 601 of processing an SDP payload beings when a system, a device, or an application element obtains an SDP payload 605. An SDP payload may be obtained when a message, *e.g*., a signaling message, is received through a network interface arrangement of a system.

Once the SDP payload is obtained, processing of the SDP payload begins at step 609. Processing of the SDP payload may generally begin with parsing the SDP payload and/or identifying the contents of the SDP payload. A determination is made in step 613 as to whether the SDP payload contains a servclass attribute, or otherwise identifies an application type or class of service that is associated with a traffic flow. Such a determination may include, but is not limited to including, determining whether the body of the SDP message includes an "a = servclass()" line or entry.

If the determination in step 613 is that the SDP payload does not contain a servclass attribute, then the indication is that a corresponding traffic flow, *e.g.,* a corresponding RTP flow, is to be processed in step 621 based on a default quality of service, and the method of processing an SDP payload is completed. In one embodiment, the SDP payload effectively indicates that any method that is typically used by the system or application element to process traffic flows may be used to process the traffic flow associated with the SDP payload.

Alternatively, if it is determined in step 613 that the SDP payload does contain a servclass attribute, or otherwise identifies an application type or class of service, the indication is that the servclass attribute may be used to request an appropriate quality of service to use when performing admission control and/or when assigning a DSCP for an associated flow. As such, process flow moves from step 613 to step 617 in which a traffic flow corresponding to the SDP payload is processed based on the class of service identified by the servclass attribute, and the method of processing an SDP message is completed.

Although only a few embodiments have been described in this disclosure, it should be understood that the disclosure may be embodied in many other specific forms without departing from the scope of the present disclosure. By way of example, while each domain in a network may be arranged to map an application type or class of service into a particular DSCP that is associated with the domain, DSCPs may instead be globally associated with an application type or class of service. That is, in lieu of a local domain substantially deciding which DSCP value may be appropriate for an application contained or identified in a RTP flow, DSCPs may instead be defined within a network.

It should be appreciated that any number of application types or classes of service may generally be identified as a servclass attribute in an SDP payload. Although approximately twelve applications types or classes of service have been described, fewer than or more than twelve application types or classes of service may be identified as a servclass attribute. In addition, the tags associated with a servclass attribute may vary widely without departing from the scope of the disclosure.

The use of a servclass attribute has generally been described as being associated with an SDP payload and, hence SIP signaling and/or RTSP signaling. It should be understood that the use of a servclass attribute is not limited to being associated with an SDP payload.

Substantially any time during the lifetime of a call, an application type or class of service may be changed. That is, mid-call changes in call attributes may occur. For example, two parties may initially engage in a voice call, and then subsequently add a video component to the call. In such a case, the service class associated with the call may be changed from indicating a voice call to indicating the presence of a video component. When such a change occurs, in one embodiment, a new attribute may be exchanged via an SDP payload carried in a SIP message. More generally, an attribute may be exchanged via an SDP payload substantially anytime during the duration of a call. Such an exchange may generally be initiated by any party to a call.

While the use of application types and classes of service has generally been described as suitable for effectuating quality of service handling, it should be appreciated that application types and classes of service may be used in conjunction with other types of handling. For instance, the use of application types and classes of service may effectuate any suitable policy handling and/or admission control without departing from the scope of the disclosure.

The embodiments may be implemented as hardware and/or software logic embodied in a tangible medium that, when executed, is operable to perform the various methods and processes described above. That is, the logic may be embodied as physical arrangements, modules, or components. A tangible medium may be substantially any suitable physical, computer-readable medium that is capable of storing logic which may be executed, *e.g.*, by a computing system, to perform methods and functions associated with the embodiments. Such computer-readable media may include, but are not limited to including, physical storage and/or memory devices. Executable logic may include code devices, computer program code, and/or executable computer commands or instructions.

It should be appreciated that a computer-readable medium, or a machine-readable medium, may include transitory embodiments and/or non-transitory embodiments, *e.g*., signals or signals embodied in carrier waves. That is, a computer-readable medium may be associated with non-transitory tangible media and transitory propagating signals.

The steps associated with the methods of the present disclosure may vary widely. Steps may be added, removed, altered, combined, and reordered without departing from the scope of the present disclosure. Therefore, the present examples are to be considered as illustrative and not restrictive, and the examples is not to be limited to the details given herein, but may be modified within the scope of the appended claims.

## Claims

1. A method comprising:
generating a Session Description Protocol, SDP, construct (104), the SDP construct being arranged to be included in a first signaling flow (108), the first signaling flow being a Session Initiation Protocol, SIP, signaling flow;
providing an attribute in the SDP construct, the attribute being provided in a body of a payload of the SDP construct, the attribute being arranged to identify an application type associated with a first traffic flow, the first traffic flow being a real-time transport protocol, RTP, traffic flow;
forwarding the SDP construct (104) on the first signaling flow (108) from a first element (160a) in a first administrative domain (144a) to a second element (160b) in a second administrative domain (144b), wherein the attribute further comprises a directional tag arranged to enable the second administrative domain (144b) to process the first traffic flow by indicating whether the traffic is to be sent only, received only, or both sent and received;
wherein the method further comprises, after forwarding the SDP construct on the first signaling flow:
determining that the application type associated with the first traffic flow has changed;
generating an updated SDP construct, the SDP construct being arranged to be included in a second signaling flow, the second signaling flow being a SIP signaling flow between the first and second elements (160a, 160b);
providing an updated attribute in the updated SDP construct, the updated attribute being arranged to identify the changed application type; and
forwarding the updated SDP construct on the second signaling flow.

2. The method of claim 1, wherein the SDP construct is an offer message, the method further including:
obtaining an answer message from the second element, the SDP answer message being arranged to identify an application type associated with a second traffic flow.

3. The method of claim 1, wherein the SDP construct is associated with one selected from the group including an offer message and an answer message.

4. The method of claim 1, wherein the application type provides an indication of a quality of service associated with the first traffic flow.

5. The method of claim 1, wherein the application type provides an indication of one selected from a group including a policy associated with the first traffic flow and admission control associated with the first traffic flow.

6. The method of claim 1, wherein generating the SDP construct includes generating the SDP construct using an element included in the first administrative domain.

7. A computer-readable medium comprising computer program code, the computer program code, when executed, configured to perform all steps of a method according to any one of claims 1 to 6.

8. An apparatus associated with a first administrative domain, the apparatus comprising:
a processing arrangement;
a network interface arrangement; and
Session Description Protocol, SDP, logic, the SDP logic being arranged to cooperate with the processing arrangement, the SDP logic being configured to perform all steps of a method according to any one of claims 1 to 6.

9. The apparatus of claim 8, wherein the network interface arrangement is configured to obtain a second SDP construct associated with a second signaling flow on the network from a second administrative domain, the first administrative domain and the second administrative domain being associated with different service providers, and wherein the SDP logic is arranged to process the second SDP construct to determine a class of service associated with a second traffic flow, optionally wherein the SDP logic is further arranged to apply a policy to the second traffic flow, the policy being determined using the class of service associated with the second traffic flow.

10. The apparatus of claim 8, wherein when the class of service associated with the first traffic flow changes, the SDP logic is configured to generate a second SDP construct that includes an updated class of service associated with the first traffic flow, the second SDP construct being arranged to be provided with a second signaling flow to a network through the network interface arrangement.

## Patentansprüche

1. Verfahren, das Folgendes beinhaltet:
Erzeugen eines SDP-(Session Description Protocol)-Konstrukts (104), wobei das SDP-Konstrukt zum Einschließen in einen ersten Signalisierungsfluss (108) ausgelegt ist, wobei der erste Signalisierungsfluss ein SIP-(Session Initiation Protocol)-Signalisierungsfluss ist;
Bereitstellen eines Attributs in dem SDP-Konstrukt, wobei das Attribut in einem Körper einer Nutzlast des SDP-Konstrukts bereitgestellt wird, wobei das Attribut zum Identifizieren eines mit einem ersten Verkehrsfluss assoziierten Anwendungstyps ausgelegt ist, wobei der erste Verkehrsfluss ein RTP-(Real-time Transport Protocol-Verkehrsfluss ist;
Weiterleiten des SDP-Konstrukts (104) auf dem ersten Signalisierungsfluss (108) von einem ersten Element (160a) in einer ersten administrativen Domäne (144a) zu einem zweiten Element (160b) in einer zweiten administrativen Domäne (144b), wobei das Attribut ferner ein direktionales Tag umfasst, ausgelegt, um es zu ermöglichen, dass die zweite administrative Domäne (144b) den ersten Verkehrsfluss verarbeitet durch Anzeigen, ob der Verkehr nur gesendet, nur empfangen oder sowohl gesendet als auch empfangen werden soll;
wobei das Verfahren ferner, nach dem Weiterleiten des SDP-Konstrukts auf dem ersten Signalisierungsfluss, Folgendes beinhaltet:
Feststellen, dass sich der mit dem ersten Verkehrsfluss assoziierte Anwendungstyp geändert hat;
Erzeugen eines aktualisierten SDP-Konstrukts, wobei das SDP-Konstrukt zum Einschließen in einen zweiten Signalisierungsfluss ausgelegt ist, wobei der zweite Signalisierungsfluss ein SIP-Signalisierungsfluss zwischen dem ersten und zweiten Element (160a, 160b) ist;
Bereitstellen eines aktualisierten Attributs in dem aktualisierten SDP-Konstrukt, wobei das aktualisierte Attribut zum Identifizieren des geänderten Anwendungstyps ausgelegt ist; und
Weiterleiten des aktualisierten SDP-Konstrukts auf dem zweiten Signalisierungsfluss.

2. Verfahren nach Anspruch 1, wobei das SDP-Konstrukt eine Angebotsnachricht ist, wobei das Verfahren ferner Folgendes beinhaltet:
Einholen einer Antwortnachricht vom zweiten Element, wobei die SDP-Antwortnachricht zum Identifizieren eines mit einem zweiten Verkehrsfluss assoziierten Anwendungstyps ausgelegt ist.

3. Verfahren nach Anspruch 1, wobei das SDP-Konstrukt mit einem Konstrukt assoziiert ist, das ausgewählt ist aus der Gruppe, die eine Angebotsnachricht und eine Antwortnachricht beinhaltet.

4. Verfahren nach Anspruch 1, wobei der Anwendungstyp eine Anzeige einer mit dem ersten Verkehrsfluss assoziierten Dienstqualität bereitstellt.

5. Verfahren nach Anspruch 1, wobei der Anwendungstyp einen Hinweis auf ein ausgewähltes Mitglied einer Gruppe bereitstellt, die eine mit dem ersten Verkehrsfluss assoziierte Richtlinie und eine mit dem ersten Verkehrsfluss assoziierte Zugangskontrolle beinhaltet.

6. Verfahren nach Anspruch 1, wobei das Erzeugen des SDP-Konstrukts das Erzeugen des SDP-Konstrukts mit einem in der ersten administrativen Domäne enthaltenen Element beinhaltet.

7. Computerlesbares Medium, das Computerprogrammcode umfasst, wobei der Computerprogrammcode bei Ausführung zum Durchführen aller Schritte eines Verfahrens nach einem der Ansprüche 1 bis 6 konfiguriert ist.

8. Vorrichtung, assoziiert mit einer ersten administrativen Domäne, wobei die Vorrichtung Folgendes umfasst:
eine Verarbeitungsanordnung;
eine Netzwerkschnittstellenanordnung; und
SDP-(Session Description Protocol)-Logik, wobei die SDP-Logik zum Kooperieren mit der Verarbeitungsanordnung ausgelegt ist, wobei die SDP-Logik zum Durchführen aller Schritte eines Verfahrens nach einem der Ansprüche 1 bis 6 konfiguriert ist.

9. Vorrichtung nach Anspruch 8, wobei die Netzwerkschnittstellenanordnung zum Einholen eines mit einem zweiten Signalisierungsfluss auf dem Netzwerk assoziierten zweiten SDP-Konstrukts von einer zweiten administrativen Domäne konfiguriert ist, wobei die erste administrative Domäne und die zweite administrative Domäne mit unterschiedlichen Dienstanbietern assoziiert sind und wobei die SDP-Logik zum Verarbeiten des zweiten SDP-Konstrukts zum Bestimmen einer mit einem zweiten Verkehrsfluss assoziierten Dienstklasse ausgelegt ist, wobei die SDP-Logik optional ferner zum Anwenden einer Richtlinie auf den zweiten Verkehrsfluss ausgelegt ist, wobei die Richtlinie anhand der mit dem zweiten Verkehrsfluss assoziierten Dienstklasse bestimmt wird.

10. Vorrichtung nach Anspruch 8, wobei die SDP-Logik, wenn sich die mit dem ersten Verkehrsfluss assoziierte Dienstklasse ändert, zum Erzeugen eines zweiten SDP-Konstrukts konfiguriert ist, das eine mit dem ersten Verkehrsfluss assoziierte aktualisierte Dienstklasse beinhaltet, wobei das zweite SDP-Konstrukt so ausgelegt ist, dass es mit einem zweiten Signalisierungsfluss zu einem Netzwerk durch die Netzwerkschnittstellenanordnung versorgt wird.

## Revendications

1. Procédé, comprenant de :
générer un élément de protocole de description de session, SDP, (104), l'élément SDP étant agencé pour être inclus dans un premier flux de signalisation (108), le premier flux de signalisation étant un flux de signalisation de protocole d'initiation de session, SIP ;
fournir un attribut dans l'élément SDP, l'attribut étant fourni dans un corps d'une charge utile de l'élément SDP, l'attribut étant agencé pour identifier un type d'application associé à un premier flux de trafic, le premier flux de trafic étant un flux de trafic de protocole de transport en temps réel , RTP ;
transmettre l'élément SDP (104) sur le premier flux de signalisation (108) à partir d'un premier élément (160a) dans un premier domaine administratif (144a) à un second élément (160b) dans un second domaine administratif (144b), dans lequel l'attribut comprend en outre une étiquette de direction agencée pour permettre au second domaine administratif (144b) de traiter le premier flux de trafic en indiquant si le trafic doit être envoyé uniquement, reçu uniquement, ou à la fois envoyé et reçu ;
dans lequel le procédé comprend en outre, après la transmission de l'élément SDP sur le premier flux de signalisation, de :
déterminer que le type d'application associé au premier flux de trafic a changé ;
générer un élément SDP mise à jour, l'élément SDP étant agencé pour être inclus dans un second flux de signalisation, le second flux de signalisation étant un flux de signalisation SIP entre les premier et second éléments (160a, 160b) ;
fournir un attribut mis à jour dans l'élément SDP mis à jour, l'attribut mis à jour étant agencé pour identifier le type d'application modifié ; et
transmettre l'élément SDP mise à jour sur le second flux de signalisation.

2. Procédé selon la revendication 1, dans lequel l'élément SDP est un message d'offre, le procédé comprenant en outre de :
obtenir un message de réponse à partir du second élément, le message de réponse SDP étant agencé pour identifier un type d'application associé à un second flux de trafic.

3. Procédé selon la revendication 1, dans lequel l'élément SDP est associée à un élément choisi dans le groupe comprenant un message d'offre et un message de réponse.

4. Procédé selon la revendication 1, dans lequel le type d'application fournit une indication d'une qualité de service associée au premier flux de trafic.

5. Procédé selon la revendication 1, dans lequel le type d'application fournit une indication d'un élément choisi parmi un groupe comprenant une politique associée au premier flux de trafic et un contrôle d'admission associé au premier flux de trafic.

6. Procédé selon la revendication 1, dans lequel la génération de l'élément SDP comprend de générer l'élément SDP en utilisant un élément inclus dans le premier domaine administratif.

7. Support lisible par ordinateur comprenant un code de programme d'ordinateur, le code de programme d'ordinateur, lorsqu'il est exécuté, étant configuré pour exécuter toutes les étapes d'un procédé selon l'une quelconque des revendications 1 à 6.

8. Appareil associé à un premier domaine administratif, l'appareil comprenant :
un agencement de traitement ;
un agencement d'interface réseau ; et
Logique de protocole de session de description, SDP, la logique SDP étant agencée pour coopérer avec l'agencement de traitement, la logique SDP étant configurée pour effectuer toutes les étapes d'un procédé selon l'une quelconque des revendications 1 à 6.

9. Appareil selon la revendication 8, dans lequel l'agencement d'interface réseau est configuré pour obtenir un second élément SDP associé à un second flux de signalisation sur le réseau à partir d'un second domaine administratif, le premier domaine administratif et le second domaine administratif étant associés à des fournisseurs de services différents, et dans lequel la logique SDP est agencée pour traiter le second élément SDP afin de déterminer une classe de service associée à un second flux de trafic, éventuellement dans lequel la logique SDP est en outre agencée pour appliquer une politique au second flux de trafic, la politique étant déterminée en utilisant la classe de service associée au second flux de trafic.

10. Appareil selon la revendication 8, dans lequel lorsque la classe de service associée au premier flux de trafic change, la logique SDP est configurée pour générer un second élément SDP qui comprend une classe de service mise à jour associée au premier flux de trafic, le second élément SDP étant agencé pour être fourni avec un second flux de signalisation à un réseau par l'intermédiaire de l'agencement d'interface réseau.
